# EUROPÄISCHE PATENTANMELDUNG

(11) **EP 0 875 452 A2**
(43) Veröffentlichungstag der Anmeldung: **04.11.1998**
(21) Anmeldenummer: 98102160.3
(22) Anmeldetag: 07.02.1998
(51) Int. Cl.: B64C 21/06

(54) **Verfahren zur Herstellung eines Strukturbauelementes mit definierter Perforation**

(30) Priorität: 02.05.1997 DE 19718610
(71) Anmelder: Daimler-Benz Aerospace Airbus Gesellschaft mit beschränkter Haftung, 21129 Hamburg (DE)
(72) Erfinder: Lutzer, Wilhelm, Dipl.-Ing., 22589 Hamburg (DE)
(74) Vertreter: Hansmann, Dierk, Dipl.-Ing.

(57) **Zusammenfassung**

Verfahren zur Herstellung eines Strukturbauelementes mit definierter Perforation, vorzugsweise zur Verwendung als Oberflächenbauelement für eine Laminarabsaugung im Tragflügelbereich eines Flugzeuges.

Ein erfindungsgemäßes technisch unaufwendiges und preiswertes Verfahren, durch welches ein Alternativmaterial zum lasergebohrten Titanblech hergestellt wird, ist durch folgende Verfahrensschritte gekennzeichnet:
- es werden zwei eigenständige, dreidimensionale und aufeinanderliegende CFK-Prepregs (1,2) aus mehreren CFK-Fasern (3) hergestellt,
- senkrecht zu der Berührungsfläche (4) der beiden CFK-Prepregs (1,2) werden Platzhalterfasern (5) aus einem Material mit einer Verdampfungstemperatur oberhalb der Aushärtungstemperatur der CFK-Prepregs (1,2) in diese derart eingewebt, daß die Platzhalterfasern (5) beide CFK-Prepregs (1,2) durchsetzen und diese zusammenhalten,
- die beiden CFK-Prepregs (1,2) werden nach Durchführung eines Verdichtungsprozesses durch Aufschneiden der Berührungsfläche (4) derart getrennt, daß die Platzhalterfasern (5) nahezu senkrecht zu den entstehenden Oberflächen (4') der Prepregs (1,2) verlaufen,
- die CFK-Prepregs (1,2) werden in seine vorgegebene Form gebracht und bei etwa 120 °C gehärtet, und
- nach dem Härten werden die CFK-Prepregs (1,2) weiter erwärmt, so daß die Materialien der Platzhalterfasern (5) rückstandslos in die Gasphase übergehen und somit die die CFK-Prepregs (1,2) in Richtung ihrer Oberflächen durchdringenden Perforationskanäle geöffnet werden.

## Beschreibung

Die Erfindung betrifft ein Verfahren zur Herstellung eines Strukturbauelementes mit definierter Perforation, vorzugsweise zur Verwendung als Oberflächenbauelement für eine Laminarabsaugung im Tragflügelbereich eines Flugzeuges.

Aus der Aerodynamik ist es bekannt, daß eine laminare Umströmung von Trag- und Leitflächen den höchstmöglichen Auftrieb bei gleichzeitig geringstem Widerstand gegen die Anströmrichtung liefert. Häufig ist es aufgrund der gegebenen Profilform jedoch nicht möglich, für alle auftretenden Anströmbedingungen eine solche laminare Strömung zu gewährleisten. Selbst bei konstanten Anströmbedingungen kann sich die Strömung an Unstetigkeiten des Profils ablösen und turbulent werden mit der Folge verminderten Auftriebs und erhöhten Profilwiderstandes.

Wie weiterhin aus der Aerodynamik bekannt ist, kann durch kontinuierliches Absaugen der turbulenten Schicht eine weitgehende Laminarisierung der Strömung erreicht werden. Da unter Reiseflugbedingungen eine Widerstandsverminderung zugleich auch zu einer erheblichen Treibstoffersparnis und somit zu beträchtlichen wirtschaftlichen Vorteilen führt, wurde bereits versucht, durch das Anbringen von Absaugöffnungen im Tragflügel zu einer solchen Strömungslaminarisierung zu gelangen.

Aus der DE 44 36 748 C1 ist ein Verfahren zur Herstellung innerversteifter Hohlbauteile mit perforierter Wandung bekannt, die aus wenigstens zwei Deckblechen sowie zwischen diesen angeordneten Versteifungselementen bestehen. Zumindest eines der Deckbleche eines Bauteiles ist mit Perforationen versehen, wobei das Bauteil durch Innendruck- und Temperaturbeaufschlagung in eine umgebende Negativform expandiert wird. Zwischen dem perforierten Deckblech und den Versteifungselementen wird eine Dichtfolie angeordnet, die zumindest im Bereich der Perforationen in einem sich an den Umformprozeß anschließenden Arbeitsprozeß entfernt wird.

Weiterhin ist in der EP 0 532 093 B1 eine Tragfläche mit laminarer Strömungssteuerung beschrieben, wobei die Tragfläche mindestens einen ersten Bereich und einen zweiten Bereich aufweist. Der erste Bereich wird während des Fluges einem äußeren Luftdruck unterzogen, der größer ist als der äußere Luftdruck am genannten zweiten Bereich. Die Tragfläche besitzt eine eine obere und eine untere Hautoberfläche aufweisende äußere Haut mit einer Vielzahl von Perforationen. Mit der unteren Hautoberfläche ist ein Ansaugsystem verbunden, welches Luft durch die Perforationen in einer Richtung von der oberen Oberfläche zur unteren Oberfläche hindurchsaugt. Bei der Herstellung dieser vorbekannten Tragfläche ist vorgesehen, daß das Perforieren der äußeren Haut unter Benutzung eines Laserstrahles erfolgt.

Zur Absaugung der Grenzschicht mit dem Ziel der Verbesserung der Laminarisierung werden heute lasergebohrte Titanbleche verwendet. Diese Bleche sind außerordentlich teuer und nach dem Bohren sehr rißempfindlich. Die Gefahr der Rißbildung - und damit der Verlust eines Bleches - ist sehr groß, da die Bleche nur im ebenen Zustand gebohrt werden können und somit in einem späteren Arbeitsvorgang verformt werden müssen.

Der Erfindung liegt die Aufgabe zugrunde, ein technisch unaufwendiges und preiswertes Verfahren zu schaffen, durch welches ein Alternativmaterial zum lasergebohrten Titanblech hergestellt wird.

Die Aufgabe wird erfindungsgemäß durch folgende Verfahrensschritte gelöst:
- es werden zwei eigenständige, dreidimensionale und aufeinanderliegende CFK-Prepregs aus mehreren CFK-Fasern hergestellt,
- senkrecht zu der Berührungsfläche der beiden CFK-Prepregs werden Platzhalterfasern aus einem Material mit einer Verdampfungstemperatur oberhalb der Aushärtungstemperatur der CFK-Prepregs in diese derart eingewebt, daß die Platzhalterfasern beide CFK-Prepregs durchsetzen und diese zusammenhalten,
- die beiden CFK-Prepregs werden nach Durchführung eines Verdichtungsprozesses durch Aufschneiden der Berührungsfläche derart getrennt, daß die Platzhalterfasern nahezu senkrecht zu den entstehenden Oberflächen der Prepregs verlaufen,
- die CFK-Prepregs werden in ihre vorgegebene Form gebracht und bei etwa 120 °C gehärtet, und
- nach dem Härten werden die CFK-Prepregs weiter erwärmt, so daß die Materialien der Platzhalterfasern rückstandslos in die Gasphase übergehen und somit die die CFK-Prepregs in Richtung ihrer Oberflächen durchdringenden Perforationskanäle geöffnet werden.

Durch das erfindungsgemäße Verfahren ist vorteilhafterweise die Herstellung von Strukturbauelemente mit definierter Perforation möglich, ohne daß die Gefahr einer Rißbildung innerhalb der Bauelemente und damit ihr Verlust besteht.

Ausgestaltungen des erfindungsgemäßen Verfahrens sind in den Unteransprüchen 2 bis 12 beschrieben, beispielsweise können die Strukturbauelemente nach dem Härten auf etwa 1400 °C pyrolysiert werden.

In der Zeichnung ist ein Ausführungsbeispiel von nach dem erfindungsgemäßen Verfahren hergestellten Strukturbauelementen dargestellt, und zwar zeigen
- Fig. 1:: zwei aufeinanderliegende CFK-Prepregs im nicht aufgeschnittenen Zustand vor ihrer Fertigstellung, und
- Fig. 2:: zwei CFK-Prepregs gemäß Fig. 1 mit zusätzlichen auf ihren äußeren Oberflächen angeordneten Platzhalterfasern.

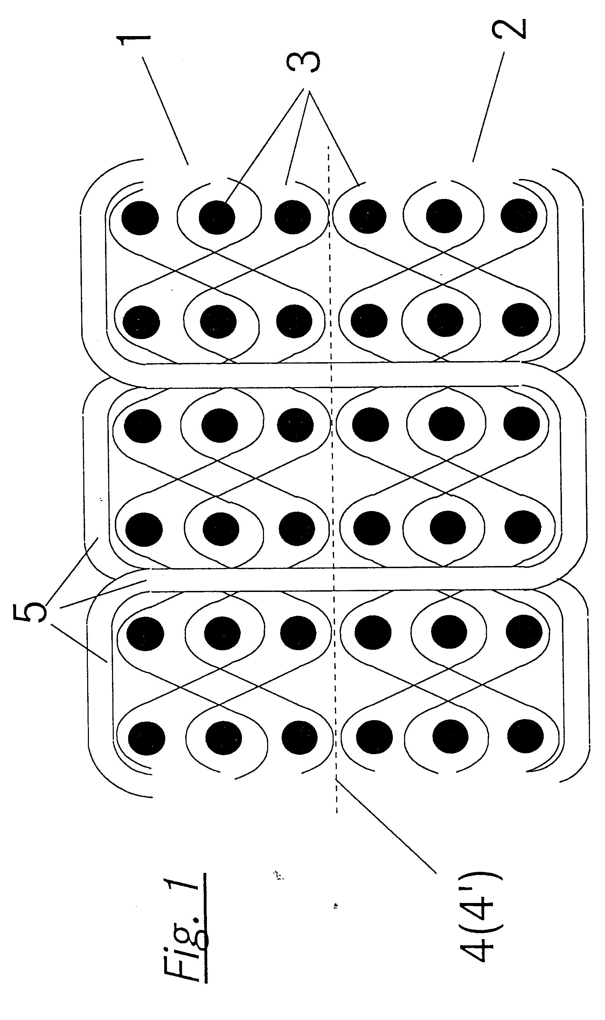

In Fig. 1 bestehen zwei eigenständige, dreidimensionale und aufeinanderliegende CFK-Prepregs 1 und 2 aus mehreren CFK-Fasern 3. Die Herstellung der Prepregs 1 und 2 kann entweder durch ein dreidimensionales Verweben von CFK-Fasern 3 oder durch Tränken von fertigen CFK-Geweben erfolgen. Senkrecht zu der mit 4 bezeichneten Berührungsfläche beider CFK-Prepregs 1 und 2 sind Platzhalterfasern 5 aus einem Material mit einer Verdampfungstemperatur, die über der Aushärtungstemperatur der CFK-Prepregs liegt, derart eingewebt, daß die Platzhalterfasern 5 beide CFK-Prepregs 1 und 2 durchsetzen und diese zusammenhalten. Als Materialien für die Platzhalterfasern 5 können z.B. Faserelemente aus POM (Polyoxymethylen / Polyformaldehyd oder Polyacetalharz), PMMA (Polymethylmethacrylat) oder PET (Polyäthylenterephthalat) verwendet werden.

Die aus Fig. 1 ersichtlichen CFK-Prepregs 1 und 2 werden nach Durchführung eines Verdichtungsprozesses durch Aufschneiden der Berührungsfläche 4 derart getrennt, daß die Platzhalterfasern 5 nahezu senkrecht zu den entstehenden Oberflächen 4' der Prepregs 1 und 2 verlaufen. Anschließend werden die CFK-Prepregs in ihre vorgegebene Form gebracht und bei etwa 120 °C gehärtet. Dann werden die Prepregs 1 und 2 weiter erwärmt, z. B. auf eine Anfangstemperatur von etwa 200 bis 300 °C, so daß die Materialien der Platzhalterfasern 5 rückstandslos in die Gasphase übergehen. Somit werden die das CFK-Prepreg 1 in Richtung ihrer Oberflächen 3 durchdringenden Perforationskanäle geöffnet. Das Strukturbauelement kann auch nach dem Härten auf etwa 1400 °C pyrolysiert werden.

Es können an ihrem äußeren Umfang beschichtete Platzhalterfasern 5 derart verwendet werden, daß nach dem Auflösen der Platzhalterfasern 5 die Beschichtungen die Wandungen der Perforationskanäle bilden. Durch die Verwendung von beispielsweise metallisch beschichteten Platzhalterfasern wird vorteilhafterweise ein Eindringen des Imprägnierharzes in die nach dem Auflösen der Platzhalterfasern freiwerdenden Plätze verhindert. Die Beschichtungen bleiben beim Auflösen der Fasern sozusagen als Außenhaut in ihrer Form und Lage bestehen.

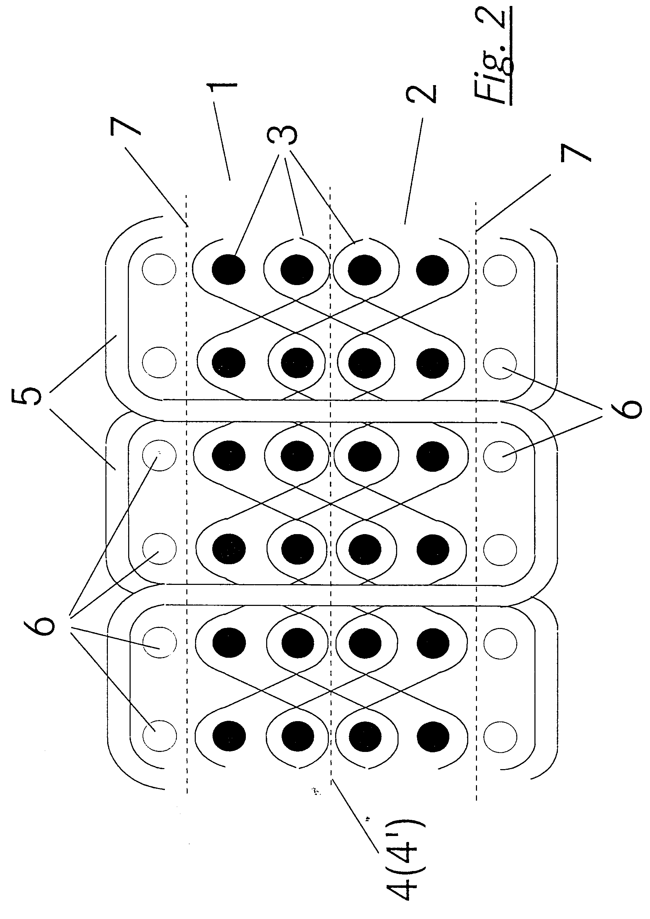

Wie aus Fig. 2 zu ersehen ist, können - damit die herzustellenden Perforationskanäle möglichst geradlienig und senkrecht zu den Oberflächen der CFK-Prepregs 1 und 2 verlaufen - auf den äußeren Oberflächen der CFK-Prepregs jeweils eine Lage aus Platzhalterfasern 6 eingewebt werden. Diese Faser-Lagen, die parallel zu den Oberflächen der CFK-Prepregs 1 und 2 liegen und die von den anderen Platzhalterfasern 5 durchdrungen sind, werden vor Fertigstellung der Strukturbauelemente entfernt. Vorteilhafterweise wird die Entfernung der Lagen aus Platzhalterfasern 6 nach der Formgebung der CFK-Prepregs 1 und 2 im gleichen Arbeitsschritt mit den Platzhalterfasern 5 zur Herstellung der Perforationskanäle thermisch durchgeführt. Die dann erhaltenen Oberflächen sind mit 7 bezeichnet.

Es ist auch möglich, vor dem Härten der CFK-Prepregs 1 und 2 in ihren tieferen Lagen beheizbare Metallfasern einzuweben, mit deren Hilfe eine Enteisung des hergestellten Strukturbauelementes durchgeführt werden kann.

## Patentansprüche

1. Verfahren zur Herstellung eines Strukturbauelementes mit definierter Perforation, vorzugsweise zur Verwendung als Oberflächenbauelement für eine Laminarabsaugung im Tragflügelbereich eines Flugzeuges, gekennzeichnet durch folgende Verfahrensschritte:
- es werden zwei eigenständige, dreidimensionale und aufeinanderliegende CFK-Prepregs (1,2) aus mehreren CFK-Fasern (3) hergestellt,
- senkrecht zu der Berührungsfläche (4) der beiden CFK-Prepregs (1,2) werden Platzhalterfasern (5) aus einem Material mit einer Verdampfungstemperatur oberhalb der Aushärtungstemperatur der CFK-Prepregs (1,2) in diese derart eingewebt, daß die Platzhalterfasern (5) beide CFK-Prepregs (1,2) durchsetzen und diese zusammenhalten,
- die beiden CFK-Prepregs (1,2) werden nach Durchführung eines Verdichtungsprozesses durch Aufschneiden der Berührungsfläche (4) derart getrennt, daß die Platzhalterfasern (5) nahezu senkrecht zu den entstehenden Oberflächen (4') der Prepregs (1,2) verlaufen,
- die CFK-Prepregs (1,2) werden in ihre vorgegebene Form gebracht und bei etwa 120 °C gehärtet, und
- nach dem Härten werden die CFK-Prepregs (1,2) weiter erwärmt, so daß die Materialien der Platzhalterfasern (5) rückstandslos in die Gasphase übergehen und somit die die CFK-Prepregs (1,2) in Richtung ihrer Oberflähhen (4') durchdringenden Perforationskanäle geöffnet werden.

2. Verfahren nach Anspruch 1, dadurch gekennzeichnet, daß die CFK-Prepregs (1,2) durch ein dreidimensionales Verweben von CFK-Fasern (3) hergestellt werden.

3. Verfahren nach Anspruch 1, dadurch gekennzeichnet, daß die CFK-Prepregs (1,2) durch Tränken von fertigen CFK-Geweben hergestellt werden.

4. Verfahren nach Anspruch 1, 2 oder 3, dadurch gekennzeichnet, daß die Strukturbauelemente nach dem Härten auf etwa 1400 °C pyrolysiert werden.

5. Verfahren nach Anspruch 1, dadurch gekennzeichnet, daß als Material für die Platzhalterfasern (5) POM verwendet wird.

6. Verfahren nach Anspruch 1, dadurch gekennzeichnet, daß PMMA als Material für die Platzhalterfasern (5) verwendet wird.

7. Verfahren nach Anspruch 1, dadurch gekennzeichnet, daß als Material für die Platzhalterfasern (5) PET verwendet wird.

8. Verfahren nach einem der Ansprüche 1 bis 7, dadurch gekennzeichnet, daß an ihrem äußeren Umfang beschichtete Platzhalterfasern (5) derart verwendet werden, daß nach dem Auflösen der Platzhalterfasern (5) die Beschichtungen die Wandungen der Perforationskanäle bilden.

9. Verfahren nach Anspruch 1, gekennzeichnet durch die Verwendung von metallisch beschichteten Platzhalterfasern.

10. Verfahren nach einem der Ansprüche 1 bis 9, dadurch gekennzeichnet, daß auf den äußeren Oberflächen der CFK-Prepregs (1,2) jeweils eine parallel zu diesen Oberflächen liegende Lage aus Platzhalterfasern (6) eingewebt wird, die von den die CFK-Prepregs (1,2) durchdringenden Platzhalterfasern (5) durchdrungen werden, und daß die Lagen aus Platzhalterfasern (5) vor Fertigstellung der Strukturbauelemente entfernt werden.

11. Verfahren nach Anspruch 10, dadurch gekennzeichnet, daß die Lagen aus Platzhalterfasern (6) nach der Formgebung der CFK-Prepregs (1,2) im gleichen Arbeitsschritt mit den Platzhalterfasern (5) für die Perforationskanäle thermisch entfernt werden.

12. Verfahren nach einem der Ansprüche 1 bis 11, dadurch gekennzeichnet, daß vor dem Härten der CFK-Prepregs (1,2) in ihren tieferen Lagen beheizbare und damit zur Enteisung der Strukturbauelemente verwendbare Metallfasern eingewebt werden.
